# EUROPEAN PATENT APPLICATION

(11) **EP 2 270 444 A1**
(43) Date of publication of application: **05.01.2011**
(21) Application number: 09251708.5
(22) Date of filing: 02.07.2009
(51) Int. Cl.: G01F 23/00

(54) **Pressure sensing systems**

(71) Applicant: GSSC, Inc., Clearwater, FL 33760 (US)
(72) Inventor: Harper, Alan Roger, Cornwall, PL18 9AT (GB)
(74) Representative: Brown, Michael Stanley

(57) **Abstract**

A sensing system for sensing the level of liquid in a container and for providing an indication of the pressure within the container includes a magnetic member arranged for movement relative to a pneumatic switch operated by the presence or absence of a magnetic field. Spring means act on the magnetic member and urge it towards a first operative position. A weight is suspended from the magnetic member and the weight is positioned, in use, within the liquid in the container such that, when the level of liquid in the container falls to a predetermined level, the magnetic member is caused to move from its first operative position into a second operative position. The system further includes a manually displaceable member that is movable against the action of the pressure within the container and is movable by the pressure within the container when the pressure within the container exceeds a predetermined value.

## Description

### Field of the Invention

This invention relates to pressure sensing systems, and has for its object the provision of an improved form of pressure sensing system.

Pressure tanks are commonly used in the composites industry for pressurising solvents for feeding to a machine head when it needs to be flushed clean and there is a requirement for a simple pressure sensor for providing an indication of the pressure within such tanks. There is a specific need for providing a warning signal when the pressure within such tanks falls to a predetermined low level.

The liquids may be volatile and inflammable and it is a more specific object of the present invention to provide a pressure sensing system that does not include any electrically operated components.

In European Patent Application No. 09250661.7, there is described a liquid level sensing system for sensing the level of liquid in a container, the system including a magnetic member arranged for movement relative to a pneumatic switch operated by the presence or absence of a magnetic field, spring means acting on the magnetic member and urging it towards a first operative position, and a weight suspended from the magnetic member, the weight being positioned, in use, within the liquid in the container such that, when the level of liquid in the container falls to a predetermined level, the magnetic member is caused to move from its first operative position into a second operative position.

It is an object of the present invention to provide a combined liquid level and pressure sensing system within a sealed pressure container.

### Summary of the Invention

According to the present invention there is provided a sensing system for sensing the level of liquid in a container and for providing an indication of the pressure within the container, the system including a magnetic member arranged for movement relative to a pneumatic switch operated by the presence or absence of a magnetic field, spring means acting on the magnetic member and urging it towards a first operative position, and a weight suspended from the magnetic member, the weight being positioned, in use, within the liquid in the container such that, when the level of liquid in the container falls to a predetermined level, the magnetic member is caused to move from its first operative position into a second operative position, and the system further including a manually displaceable member that is movable against the action of the pressure within the container and is movable by the pressure within the container when the pressure within the container exceeds a predetermined value.

The weight is preferably connected to the magnetic member by a flexible pipe or tube and the displaceable member is preferably positioned so that it engages the magnetic member when it is moved against the action of the pressure within the container.

The second operative position of the magnetic member is preferably lower than the first operative position thereof and the arrangement is preferably such that an alarm will be operated pneumatically when the magnetic member moves into its second operative position either as a result of a fall of the level of the liquid in the container or as a result of manual movement of the displaceable member.

The spring means is preferably a compression spring and the magnetic member and the compression spring are preferably contained in a housing.

The normal correct working pressure of a container from which a cleaning fluid is supplied for flushing a machine head is typically at least 4 bar and the arrangement is preferably such that a pressure within the range of from 1.5 to 2 bar is required to return the displaceable member to its original position after movement thereof into its second operative position.

### Brief Description of the Drawings

Figure 1 is a schematic view of a device for sensing the level of liquid within a sealed pressurised container and for generating a signal when the level of the liquid within the container falls to a predetermined value, the device also including a test button that can be depressed manually,
Figure 2 shows the device of Figure 1 when a signal is generated as a result of the level of liquid within the container falling to a predetermined low level, and

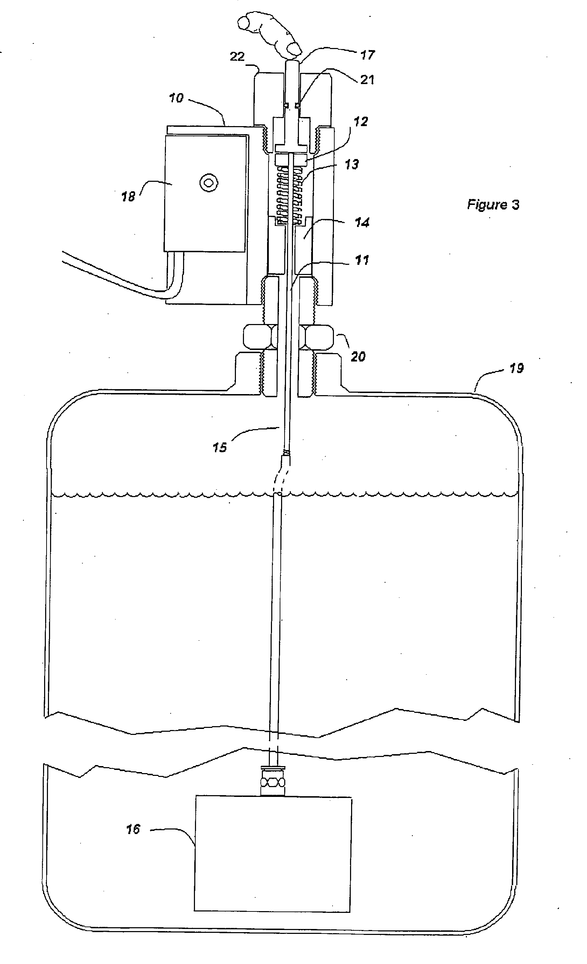

Figure 3 shows the device of Figure 1 when the test button has been pressed.

### Description of the Preferred Embodiment

The device shown in the drawings includes a housing 10 in the form of a machined non-magnetic aluminium block with a vertical hole in which a polished stainless steel rod 11 is mounted. A small ring magnet 12 is fixed to the top of the stainless steel rod 11 and the ring magnet 12 is acted on by one end of a lightweight compression spring 13, the other end of which rests upon a p.t.f.e. bush 14 contained within the vertical hole in the aluminium block.

The rod 11 is externally threaded at its lower end and the upper end of a 4 mm. nylon pipe 15 is connected to the lower end of the rod 11. The pipe 15 is cut to a suitable length and a solid machined weight 16 is attached to the lower end of the pipe 15 by means of a push-fit fitting screwed into the upper surface of the weight 16. The weight 16 may be machined from nylon or from some other suitable plastics material. It is solid, as opposed to hollow, and thus not liable to leak.

A pushbutton 17 is positioned on top of the magnet 12. It rests on the magnet 12 and projects from the housing 10 so that, if and when desired, the pushbutton 17 can be depressed manually to effect downward movement of the magnet 12 for test purposes, as described below.

The combined weight of the rod 11, the pushbutton 17, the ring magnet 12, the pipe 15 and the weight 16 is sufficient to compress the compression spring 13 when the rod 11 is positioned vertically, as shown.

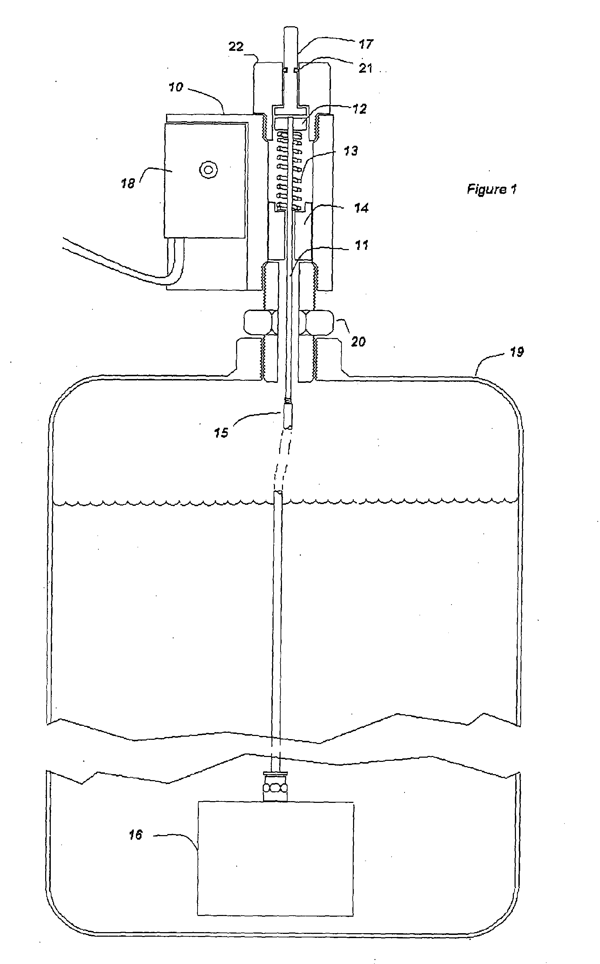

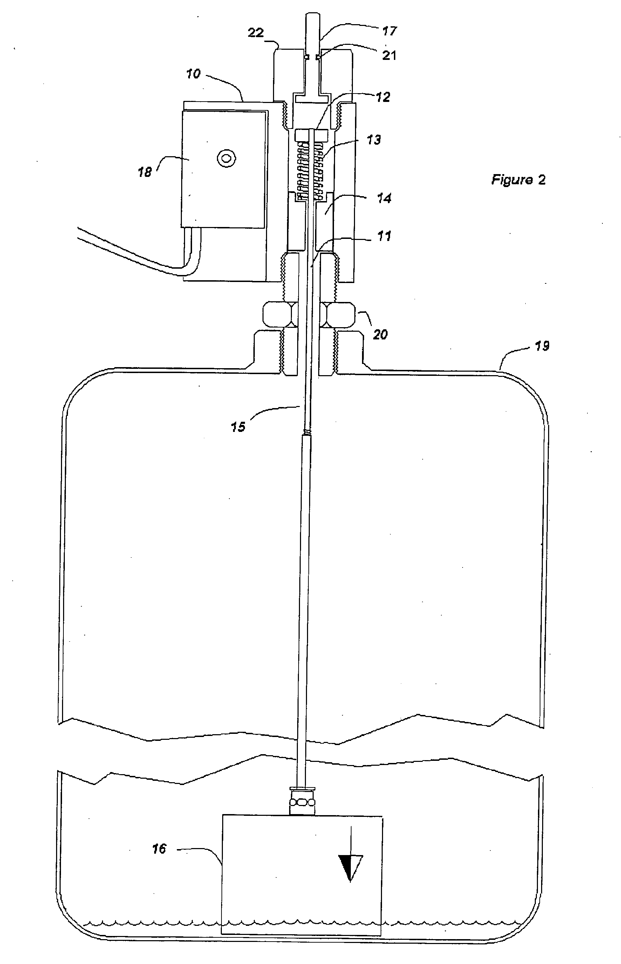

A micro pneumatic switch 18 is mounted in the housing 10 and is responsive to the presence or absence of a magnetic field. It is so positioned that it is operated when the ring magnet 12 moves from the position shown in Figure 1 into the position shown in Figure 2.

The housing 10 is mounted on top of a liquid container 19 using a suitable hollow pressure fitting 20 through which the end of the rod 11 and the pipe 15 can be inserted. The weight 16 is positioned within the container 19 and the lower end of the pipe 15 is connected to the weight 16. The length of the flexible pipe 15, which is typically of nylon, is adjusted if necessary so that the weight 16 can be suspended within the container 19 so that it can swing within the container 19 at a predetermined height clear of the base of the container (as shown in Figure1).

With no liquid in the container 19, or with very little liquid in the container 19, the weight 16 will be in the position shown in Figure 2 so that, when an air supply is connected to the switch 18, an alarm will operate as the ring magnet 12 is in the lower, alarm-switching position and the compression spring 13 is fully compressed. As the container 19 is filled with liquid, the weight 16 effectively displaces a volume of the liquid and this displacement reduces the load applied by the weight 16 to the lower end of the pipe 15. This reduction in applied load allows the compression spring 13 to uncompress and lift the weight 16, the pipe 15, the rod 11 and the ring magnet 12. Movement of the ring magnet 12 from the position shown in Figure 2 into the position shown in Figure 1 will release the pneumatic switch 18 and the alarm will be turned off.

The test button 17 includes a stem that carries an O-ring seal 21 that has a close sealing engagement with a wall of a vertical bore in a block 22 that includes an externally threaded spigot portion that has threaded engagement in a correspondingly threaded bore in the upper surface of the housing 10.

With the components of the device in the positions shown in Figure 1, which they occupy when the container 19 is substantially filled with the liquid at a pressure of at least 4 bar, the alarm is effectively primed waiting for the liquid level to drop and cause the switch 18 to be operated again.

The pushbutton 17 projects from the top of the housing 10 so that, in the quiescent or non-alarmed condition, the user can simply press down on the pushbutton 17 to effect downward movement of the magnet 12 to operate the alarm so as to be assured that the system is live. When the user releases the pushbutton 17, it will move upwardly provided that the pressure within the container 19 is sufficient to overcome the frictional resistance to return movement of the pushbutton 17. The strength of the compression spring 13 is not sufficient to effect significant return movement of the pushbutton 17 - a pressure within the range of from 1.5 to 2 bar within the container 19 is required to effect upward movement of the pushbutton 17.

The space within the housing 10 permits the provision of an air whistle that is connected internally to the output of the switch 18 and thus provides a built-in audible alarm. The air supply to the switch 18 is connected to the associated machine's air supply so that the switch 18 becomes live whenever the machine is switched on. The output of the switch 18 has sufficient volume to operate a pressure switch or other device in addition to the built-in whistle to provide additional low level signally.

The rod 11 slides relative to the p.t.f.e. bush 14 so that frictional losses are minimised. The device is so designed as to minimise the likelihood of damage as a result of liquid spills or dust and all parts that might be exposed to fumes are chemically resistant and pose no potential spark or other explosion risk.

The shape and size of the displacement weight 16 will depend on the size and/or shape of the container 19 and on the specific gravity of the liquid within the container 19.

If the test pushbutton 17 is pressed when there is insufficient pressure in the container 19, but a sufficient level of liquid in the container 19, the button 17 will stay down and the alarm will be operated. This will confirm to the user that the device signals as it should and that the pressure within the container 19 is less than it should be.

## Claims

1. A sensing system for sensing the level of liquid in a container and for providing an indication of the pressure within the container, the system including a magnetic member arranged for movement relative to a pneumatic switch operated by the presence or absence of a magnetic field, spring means acting on the magnetic member and urging it towards a first operative position, and a weight suspended from the magnetic member, the weight being positioned, in use, within the liquid in the container such that, when the level of liquid in the container falls to a predetermined level, the magnetic member is caused to move from its first operative position into a second operative position, and the system further including a manually displaceable member that is movable against the action of the pressure within the container and is movable by the pressure within the container when the pressure within the container exceeds a predetermined value.

2. A sensing system as claimed in Claim 1, in which the weight is connected to the magnetic member by a flexible pipe or tube.

3. A sensing system as Claimed in Claim 1, in which the displaceable member is so positioned that it engages the magnetic member when it is moved against the action of the pressure within the container.

4. A sensing system as claimed in Claim 1, in which the second operative position of the magnetic member is lower than the first operative position thereof.

5. A sensing system as claimed in Claim 4, in which the arrangement is such that an alarm will be operated pneumatically when the magnetic member moves into its second operative position.

6. A sensing system as claimed in Claim 5, in which movement of the magnetic member into its second operative position can take place either as a result of a fall of the level of the liquid in the container or as a result of manual movement of the displaceable member.

7. A sensing system as claimed in Claim 1, in which the spring means is a compression spring and the magnetic member and the compression spring are contained in a housing.

8. A sensing system as claimed in Claim 1, in which the arrangement is such that a pressure within the range of from 1.5 to 2 bar is required to return the displaceable member to its original position after movement thereof into its second operative position.

9. A sensing system for sensing the level of liquid in a container and for providing an indication of the pressure within the container, said system being arranged to function substantially as hereinbefore described with reference to and as shown in the accompanying drawings.
